# EUROPÄISCHE PATENTSCHRIFT

(11) **EP 3 100 909 B1**
(45) Veröffentlichungstag und Bekanntmachung des Hinweises auf die Patenterteilung: **01.04.2020**
(21) Anmeldenummer: 16167269.6
(22) Anmeldetag: 27.04.2016
(51) Int. Cl.: B60Q 1/24, B60Q 1/26, B60Q 1/32, A62C 27/00

(54) **EINSATZFAHRZEUG, INSBESONDERE FEUERWEHRFAHRZEUG**
EMERGENCY VEHICLE, IN PARTICULAR A FIRE FIGHTING VEHICLE
VEHICULE D'INTERVENTION, EN PARTICULIER VEHICULE DE LUTTE CONTRE L'INCENDIE

(30) Priorität: 02.06.2015 DE 102015210115
(43) Veröffentlichungstag der Anmeldung: 07.12.2016
(73) Patentinhaber: Albert Ziegler GmbH, 89537 Giengen an der Brenz (DE)
(72) Erfinder: Ruhdorfer, Max, 71409 Schwaikheim (DE); Haag, Robert, 73431 Aalen (DE); Rasonja, Stanko, 48260 Krizevci (HR); Häußler, Sabrina, 89537 Giengen (DE)
(74) Vertreter: Patentanwälte Magenbauer & Kollegen Partnerschaft mbB

(56) Entgegenhaltungen:
- EP-A1- 2 783 953
- EP-B1- 2 516 211
- US-A- 5 782 549
- US-A- 5 918 962

## Beschreibung

Die Erfindung betrifft ein Einsatzfahrzeug, insbesondere Feuerwehrfahrzeug, mit einer Beleuchtungseinrichtung, die wenigstens ein im Bereich der Dachkante des Einsatzfahrzeugs angeordnetes Beleuchtungsmodul aufweist, das wenigstens ein am Einsatzfahrzeug befestigtes Trägerprofil aufweist, das mehrere Aufnahmeabschnitte aufweist, in denen jeweils Leuchtelemente aufgenommen sind, wobei die Aufnahmeabschnitte derart zueinander ausgerichtet sind, dass die darin aufgenommenen Leuchtelemente unterschiedliche Raumabschnitte beleuchten, wobei zu den Raumabschnitten ein fahrzeugnahes Umfeld des Einsatzfahrzeugs zählt, und wobei das Beleuchtungsmodul wenigstens ein am Trägerprofil befestigtes, lichtdurchlässiges Abdeckelement aufweist.

Ein gattungsgemäßes Einsatzfahrzeug ist aus der EP 2 783 953 A1 bekannt.

Ein weiteres Einsatzfahrzeug ist beispielsweise aus der EP 2 516 211 B1 bekannt. Das Beleuchtungsmodul des dort offenbarten Einsatzfahrzeugs besitzt ein erstes und ein zweites Leuchtmodul, die jeweils mit Leuchtelementen bestückt sind. Das erste Leuchtmodul dient zur Beleuchtung des fahrzeugnahen Umfelds des Einsatzfahrzeugs. In diesem ersten Leuchtmodul sind mindestens zwei Leuchtelemente, beispielsweise in Form von Halbleiterbauelementen aufgenommen, wobei jedes dieser Leuchtelemente das Maximum der elektromagnetischen Strahlung in eine Hauptstrahlrichtung abgibt, wobei die Hauptstrahlrichtung in einen Winkel zueinander einschließen, wodurch jedes erste Leuchtelement einen Teilbereich des ersten Raumabschnitts beleuchtet. Das zweite Leuchtmodul ist einem zweiten Aufnahmebereich des Profilteils des Beleuchtungsmoduls zugeordnet und beleuchtet mit einem dort vorgesehenen Leuchtelement einen Dachabschnitt des Einsatzfahrzeugs. Die ersten Leuchtelemente des ersten Leuchtmoduls sind auf einer Tragstruktur angeordnet, die wiederum am Profilteil befestigt ist. Schließlich ist ein transparentes Abdeckelement vorgesehen, dass das erste Leuchtmodul und damit die auf der Tragstruktur angeordneten Leuchtelemente abdeckt.

Aufgabe der Erfindung ist es, ein Einsatzfahrzeug der eingangs erwähnten Art zu schaffen, das eine funktionssichere, einfach aufgebaute und kostengünstig herstellbare Beleuchtungseinrichtung für unterschiedliche Beleuchtungsaufgaben bereitstellt.

Diese Aufgabe wird durch ein Einsatzfahrzeug mit den Merkmalen des unabhängigen Anspruchs 1 gelöst. Weiterbildungen der Erfindung sind in den Unteransprüchen dargestellt.

Das erfindungsgemäße Einsatzfahrzeug umfasst ein Trägerprofil, das einen Basisabschnitt aufweist, an dem mehrere sich jeweils in Längsrichtung des Basisabschnitts erstreckende Profilwände angeordnet sind, wobei die Aufnahmeabschnitte durch die Profilwände gebildet sind , und wobei an den Profilwänden Halterungsmittel zur Halterung der Leuchtelemente ausgebildet sind.

Im Vergleich zu dem zuvor aus der EP 2 516 211 B1 beschriebenen Stand der Technik, sind die Profilwände an einem Basisabschnitt des Trägerprofils angeordnet, das wiederum am Einsatzfahrzeug befestigt ist. Dadurch wird eine hohe Stabilität erzielt, so dass das Beleuchtungsmodul insgesamt stabil und steifer als das zuvor beschriebene aus dem Stand der Technik bekannte Beleuchtungsmodul ausgebildet ist. Ferner werden die Profilwände auch dazu genutzt, die Aufnahmeabschnitte zur Aufnahme der Leuchtelemente zu definieren. Es ist beispielsweise möglich, dass zueinander benachbarte Profilwände jeweils einen der Aufnahmeabschnitte definieren. Bei dem zuvor beschriebenen Stand der Technik ist hierzu eine spezielle Tragstruktur notwendig, die ihrerseits über Befestigungsmittel am Trägerprofil zu befestigen ist. Ferner ist die im Stand der Technik offenbarte Tragstruktur relativ kompliziert geformt und aufgebaut, da sie zueinander unterschiedlich orientierte Aufnahmebereiche bereitstellen muss, um erste Leuchtelemente aufzunehmen, die dann jeweils in unterschiedliche Hauptstrahlrichtungen strahlen. Bei der Erfindung hingegen sind die Aufnahmeabschnitte durch die Profilwände definiert, wobei zweckmäßigerweise benachbarte Profilelemente Kammern für die Leuchtelemente bilden.

In besonders bevorzugter Weise sind die Profilwände einstückig mit dem Basisabschnitt verbunden. Besonders bevorzugt sind die Profilwände aus dem Material des Trägerprofils herausgeformt. Dadurch ist es möglich, dass die Profilwände bei der Herstellung des Trägerprofils gleich mit angeformt werden. Das Trägerprofil mit den angeformten Profilwänden definiert also bereits die Aufnahmeabschnitte. Die Zahl der Bauteile des Beleuchtungsmoduls wird dadurch reduziert. Es ist also beispielsweise nicht notwendig, eine separate Tragstruktur für die Leuchtelemente vorzusehen, die dann noch am Trägerprofil befestigt werden muss, wie aus dem Stand der Technik bekannt. Ferner steigert die einstückig mit dem Basisabschnitt des Trägerprofils verbundenen Profilwände die Stabilität des gesamten Beleuchtungsmoduls, wodurch die Gefahr, dass Leuchtelemente infolge von Erschütterungen bei der Fahrt des Einsatzfahrzeugs aus deren Halterungen gelöst werden oder es zu Defekten kommt, deutlich verringert wird.

Besonders bevorzugt sind die Trägerprofile als Strangpressprofile ausgebildet. Beispielsweise kann es sich dabei um Aluminium-Strangpressprofile handeln. Derartigen Profile lassen sich in einfacher Weise herstellen und auf entsprechende Länge ablängen. Die Ausbildung der Profilwände ist mit einem Strangpressverfahren ohne weiteres möglich.

Bei einer Weiterbildung der Erfindung weist der Basisabschnitt eine Vorderseite auf, an der die Profilwände angeordnet sind. Zweckmäßigerweise besitzt der Basisabschnitt eine zur Vorderseite entgegengesetzte Rückseite, an der eine Befestigungsschnittstelle zur Befestigung am Einsatzfahrzeug ausgebildet ist. Über die Befestigungsschnittstelle lassen sich der Basisabschnitt und damit das Trägerprofil insbesondere im Bereich der Dachkante mittels Befestigungsmitteln befestigen, beispielsweise anschrauben oder werkzeuglos über geeignete Rastmittel verrasten. Ferner wäre hier auch eine stofffschlüssige Verbindung zwischen dem Trägerprofil und dem Fahrzeugdach möglich, beispielsweise könnte das Trägerprofil aufgeklebt werden.

In besonders bevorzugter Weise ist der Basisabschnitt des Trägerprofils als Winkelprofil ausgebildet und weist einen ersten und einen zweiten Schenkel auf. Zweckmäßigerweise ist der erste Schenkel in Anlage zum Dach, während der zweite Schenkel in Anlage zu einer Seitenwand des Einsatzfahrzeugs liegt. Das Beleuchtungsmodul wird insbesondere dazu verwendet, am Dach eines Kastenaufbaus des Einsatzfahrzeugs eingesetzt zu werden. Prinzipiell wäre es jedoch auch möglich, ein derartiges Beleuchtungsmodul am Dach der Fahrerkabine und / oder einer Mannschaftskabine anzubringen. Die Beleuchtungseinrichtung insbesondere das wenigstens eine Beleuchtungsmodul ist insbesondere dafür vorgesehen, ein fahrzeugnahes Umfeld des Einsatzfahrzeugs auszuleuchten. Werden Einsätze bei schlechten Lichtverhältnissen oder nachts durchgeführt, ist die ist die Ausleuchtung des fahrzeugnahen Umfelds besonders wichtig, damit beispielsweise Gerätschaften im fahrzeugnahen Umfeld sicher gehandhabt werden können. Durch eine derartige Beleuchtungseinrichtung erübrigt sich möglicherweise das Aufstellen zusätzlicher Strahler im fahrzeugnahen Umfeld. Die erfindungsgemäße Beleuchtungseinrichtung ist multifunktional, d.h. es sind mehrere jeweils mit Leuchtelemente ausgestattete Aufnahmebereiche vorgesehen, denen unterschiedliche Beleuchtungsaufgaben zugewiesen sind. Neben der Ausleuchtung des fahrzeugnahen Umfelds kann auch ein Umgebungslicht bzw. Rundumlicht vorgesehen sein, das eher nicht das fahrzeugnahes Umfeld beleuchtet, sondern in die Umgebung strahlt. Bei Einsätzen auf Flughäfen kann zudem ein rotes Dachlicht vorgesehen sein. Das Beleuchtungsmodul kann zudem mit einem insbesondere blauen Warnlicht ausgestattet sein.

Bei einer Weiterbildung der Erfindung weist der Basisabschnitt eine trapezartige Grundfläche auf, wobei vorzugsweise der der Seitenwand des Einsatzfahrzeugs zugeordnete zweite Schenkel des Basisabschnitts die trapezartige Grundfläche aufweist.

Es ist möglich, dass die trapezartige Grundfläche des zweiten Schenkels in Richtung zum Fahrzeugboden des Einsatzfahrzeugs divergiert oder konvergiert. Es ist also möglich, dass sich die Grundfläche in Richtung zum Fahrzeugboden verbreitert oder verjüngt.

Bei einer Weiterbildung der Erfindung weisen die Halterungsmittel für die Leuchtelemente an den Profilwänden ausgebildete, in Längsrichtung der Profilwände verlaufende Halterungsnuten auf, wobei jeweils zwei einander gegenüberliegende Halterungsnuten zur Aufnahme von leistenartig ausgebildeten Leuchtelementen dienen. Dadurch ist es beispielsweise möglich, die leistenartig ausgebildeten Leuchtelemente seitlich in die zugeordneten Halterungsnuten einzuschieben. Dies ist eine besonders einfache Art der Befestigung. Auch die Halterungsnuten lassen sich bei der Herstellung des Trägerprofils gleich mit anformen. Auch ein Wechsel der leistenartigen Leuchtelemente, beispielsweise zur Wartung oder bei einem Defekt, ist ohne weiteres möglich.

Es ist möglich, dass die Profilwände jeweils einen plattenartigen Grundabschnitt und wenigstens eine vom Grundabschnitt abragende, mit der Halterungsnut ausgestattete Halterippe aufweisen. Zweckmäßigerweise befinden sich die Halterungsnuten also an der zugeordneten Halterippe, die wiederum an der Profilwand angeformt ist. Auch diese Halterippen lassen sich bei der Herstellung des Trägerprofils gleich mit anformen.

In besonders bevorzugter Weise bilden zueinander benachbarte Halterippen gemeinsam einen Einschubschacht für eine mit Leuchtelemente bestückte Lichtleiste.

Erfindungsgemäß ist das lichtdurchlässige Abdeckelement derart ausgebildet, dass sämtliche Aufnahmeabschnitte des zugeordneten Beleuchtungsmoduls abgedeckt sind. Das lichtdurchlässige Abdeckelement kann beispielsweise durch eine lichtdurchlässige, insbesondere transparente Abdeckscheibe, beispielsweise aus Acrylglas, gebildet sein.

Erfindungsgemäß ist das lichtdurchlässige Abdeckelement einteilig ausgebildet und ist mittels Befestigungsmitteln im Bereich von zwei einander entgegengesetzten Enden des Basisabschnitts befestigt.

Erfindungsgemäß weist das lichtdurchlässige Abdeckelement mehrere unterschiedlich zueinander orientierte, jeweils einem der Aufnahmeabschnitte zugeordnete Abstrahlabschnitte auf. Die Abstrahlabschnitte können gemeinsam mit den zugeordneten Aufnahmebereichen und den darin aufgenommenen Leuchtelementen die Beleuchtungsaufgabe definieren. Es ist möglich, dass mindestens einer der Abstrahlabschnitte mit einer farbigen, beispielsweise blauen, gelben oder roten, Signalfarbe ausgestattet ist. Es ist beispielsweise möglich, dass der Abstrahlabschnitt mit einer derart farbigen Folie beklebt ist.

Bei den Leuchtelementen handelt es sich vorzugsweise um LEDs, beispielsweise weiße, rote und / oder blaue LEDs. Es sind jedoch auch andere Arten von Leuchtelementen einsetzbar, beispielsweise Halogenstrahler.

Bei einer Weiterbildung der Erfindung sind mehrere Beleuchtungsmodule in Längsrichtung des Einsatzfahrzeuges hintereinander an der Dachkante des Einsatzfahrzeugs befestigt, wobei vorzugsweise alternierend Beleuchtungsmodule mit divergierenden und konvergierenden Schenkeln der betreffenden Basisabschnitte der Trägerprofile vorgesehen sind.

Ein bevorzugtes Ausführungsbeispiel der Erfindung ist in der Zeichnung dargestellt und wird im Folgenden näher erläutert. In der Zeichnung zeigen:
- Figur 1: eine schematische Seitenansicht eines ersten Ausführungsbeispiels des erfindungsgemäßen Einsatzfahrzeugs in Seitenansicht,
- Figur 2: eine perspektivische Darstellung der am Einsatzfahrzeug von Figur 1 angeordneten Beleuchtungseinrichtung,
- Figur 3: eine perspektivische Darstellung einer ersten Ausführungsform eines Beleuchtungsmoduls der Beleuchtungseinrichtung von Figur 2,
- Figur 4: eine Explosionsdarstellung des Beleuchtungsmoduls von Figur 3,
- Figur 5: eine zweite Ausführungsform eines Beleuchtungsmoduls der Beleuchtungseinrichtung von Figur 2,
- Figur 6: eine Explosionsdarstellung des Beleuchtungsmoduls von Figur 5 und
- Figur 7: einen Querschnitt durch das Beleuchtungsmodul von Figur 3.

Die Figur zeigt ein bevorzugtes Ausführungsbeispiel des erfindungsgemäßen Einsatzfahrzeugs 11. Das Einsatzfahrzeug 11 ist beispielhaft anhand eines Feuerwehrfahrzeugs dargestellt. Es ist jedoch selbstverständlich möglich, dass es sich bei dem Einsatzfahrzeug 11 um ein Rettungs-, Bergungsfahrzeug oder dergleichen handeln kann.

Das beispielhaft gezeigte Feuerwehrfahrzeug besitzt eine Fahrzeugkabine 12 und eine in Fahrzeuglängsrichtung 13 dahinter angeordnete Mannschaftskabine 14. Hinter der Mannschaftskabine 14 ist ein Kastenaufbau 15 angeordnet, der aus Leichtbauprofilen aufgebaut ist, wie es beispielsweise in der EP 0 791 528 A1 offenbart ist, auf die hier vollumfänglich Bezug genommen wird. Der Kastenaufbau 15 dient zur Unterbringung von verschiedenen Geräten, beispielsweise Schläuchen, Tragkraftspritzen, oder sonstigen Feuerwehrgerätschaften. Hierzu kann der Kastenaufbau 15 mit verschiedenen Geräteräumen ausgestattet sein, die ihrerseits zweckmäßigerweise mittels Rollläden verschlossen sind. Zweckmäßigerweise befindet sich auch am Heck des Feuerwehrfahrzeugs ein mittels Rollladen verschlossener Zugang.

Die Oberseite der Fahrerkabine 12, der Mannschaftskabine 14 und des Kastenaufbaus 15 bildet ein Fahrzeugdach 16, das längsseitig von zwei Seiten-Dachkanten 17 und rückseitig von einer Heck-Dachkante 18 begrenzt ist. Neben dem Fahrzeugdach 16 besitzt das Einsatzfahrzeug 11 noch zwei aneinander entgegengesetzt angeordnete Fahrzeugseiten 19, die gemeinsam von der Seite der Fahrerkabine 12, der Mannschaftskabine 14 und des Kastenaufbaus 15 gebildet werden. Der rückwärtige Teil des Fahrzeugs wird durch das Fahrzeugheck 20 gebildet.

Das Einsatzfahrzeug 11 besitzt eine Beleuchtungseinrichtung 21, die wenigstens ein im Bereich der Seiten-Dachkanten 17 angeordnetes Beleuchtungsmodul 22, im Beispielsfall mehrere Beleuchtungsmodule 22, aufweist.

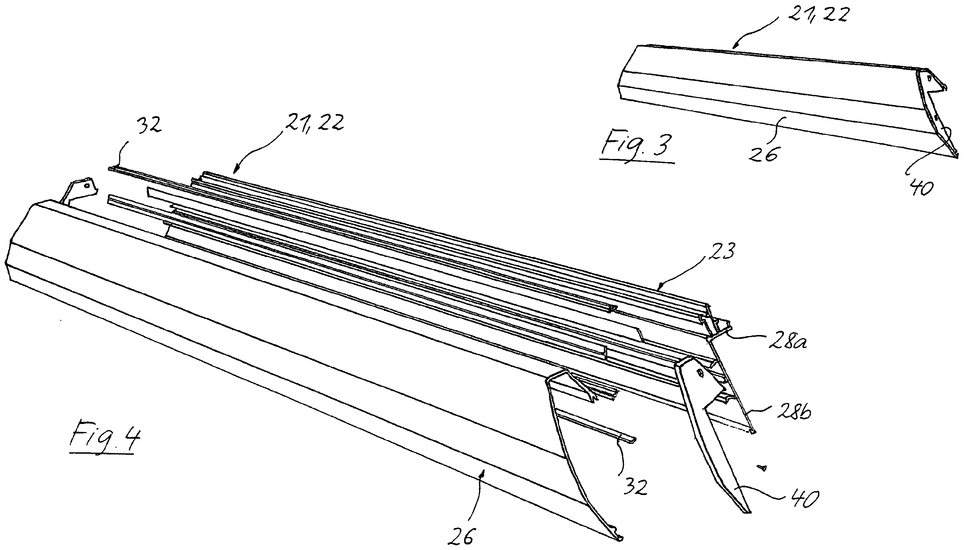

Wie insbesondere in den Figuren 3 bis 6 und insbesondere 7 dargestellt, besitzen die Beleuchtungsmodule 22 jeweils ein Trägerprofil 23, das mehrere Aufnahmeabschnitte 24a-d aufweist, in denen jeweils Leuchtelemente 25 aufgenommen sind.

Die Aufnahmebereiche 24a-d sind derart zueinander orientiert, dass die darin aufgenommenen Leuchtelemente 25 unterschiedliche Raumabschnitte beleuchten. So dienen beispielsweise im ersten Aufnahmebereich 24a aufgenommene Leuchtelemente 25 zur Beleuchtung des fahrzeugnahen Umfelds des Einsatzfahrzeugs 11. Im zweiten Aufnahmebereich 24b aufgenommene Leuchtelemente 25 dienen als Umgebungsbeleuchtung. Die im dritten Aufnahmebereich 24c aufgenommenen Leuchtelemente 25 dienen als Warnlicht, beispielsweise mit Blinkfunktion, wobei hier insbesondere blau leuchtende Leuchtelemente 25 eingesetzt werden. Die im vierten Aufnahmebereich 24d aufgenommenen Leuchtelemente 25 strahlen vom Fahrzeugdach 16 nach oben ab, wobei hier insbesondere rot leuchtende Leuchtelemente 25 eingesetzt werden, so dass der Einsatz auf Flugfeldern, die eine derartige Beleuchtung erfordern, möglich ist.

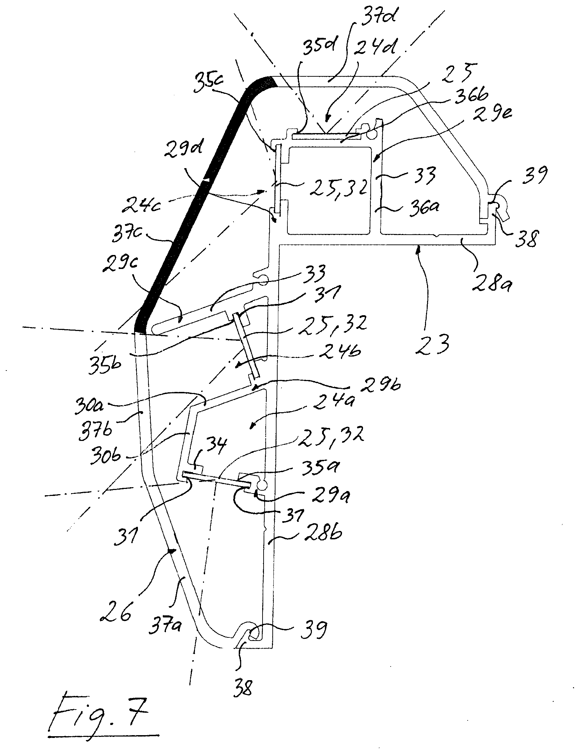

Wie insbesondere in Figur 7 dargestellt, besitzt das Beleuchtungsmodul 22 neben dem Trägerprofil 23 noch ein lichtdurchlässiges Abdeckelement 26.

Das Trägerprofil 23 besitzt einen Basisabschnitt 27, der im Beispielsfall als Winkelprofil ausgebildet ist und einen ersten Schenkel 28a sowie einen zweiten Schenkel 28b aufweist. Die beiden Schenkel 28a, 28b sind im Wesentlichen senkrecht zueinander ausgerichtet. Der Basisabschnitt 27 besitzt ferner eine Vorderseite 29, die durch die Vorderseiten der beiden Schenkel 28a, 28b gebildet ist.

Ein wesentliches Element der Erfindung sind Profilwände 29a-e, die am Basisabschnitt 27 des Trägerprofils 23 angeordnet sind und sich in Längsrichtung des Basisabschnitts 27 erstrecken.

Im gezeigten Beispielsfall sind die Profilwände 29a-e einstückig mit dem Basisabschnitt 27 verbunden und werden bei der Herstellung des Trägerprofils 23 gleich mit angeformt. Im gezeigten Beispielsfall ist das Trägerprofil 23 ein Strangpressprofil, insbesondere Aluminium-Strangpressprofil.

Die Aufnahmeabschnitte 24a-d werden durch die Profilwände 29a-e definiert, insbesondere in der Art, das zueinander benachbarte Profilwände 29a-e jeweils einen der Aufnahmeabschnitte 24a-d definieren. Die Profilwände 29a-e bilden demnach kammerartige Aufnahmeabschnitte 29a-d bzw. Aufnahmekammern, in denen Leuchtelemente 25 aufgenommen sind.

Im gezeigten Beispielsfall sind, wie bereits erwähnt, vier Aufnahmeabschnitte 24a-d vorgesehen, die unterschiedlich zueinander orientiert sind und deren darin aufgenommene Leuchtelemente 25 unterschiedliche Raumabschnitte beleuchten.

Am zweiten Schenkel 28b des Basisabschnitts 27 befindet sich eine erste Profilwand 29a, die von der Vorderseite des zweiten Schenkels 28b ein kurzes Stück nach schräg oben abragt. In Höhenrichtung über der ersten Profilwand 29a ist eine zweite Profilwand 29b an den zweiten Schenkel 28b angesetzt, die deutlich länger als die erste Profilwand 29a ausgebildet ist und einen ersten Profilwandabschnitt 30a aufweist, der vom zweiten Schenkel 28b ausgehend schräg nach unten verläuft. An diesem ersten Profilwandabschnitt 30a ist ein zweiter Profilwandabschnitt 30b schräg angesetzt, der in etwa die Länge des ersten Profilwandabschnitts 30a aufweist. Die beiden Profilwandabschnitte 30a, 30b schließen gemeinsam einen stumpfen Winkel ein.

Die erste und zweite Profilwand 29a, 29b bilden demnach den ersten Aufnahmeabschnitt 24a für das zugeordnete Leuchtelement 25. Der Aufnahmeabschnitt 24a ist derart orientiert, dass die Hauptstrahlrichtung des darin aufgenommenen Leuchtelements 25 relativ steil nach schräg unten ausgerichtet ist, so dass dadurch ein Raumabschnitt in Form eines fahrzeugnahen Umfelds beleuchtet wird.

Wie insbesondere in Figur 7 zu erkennen, stellen die Profilwände 29a-e auch Halterungsmittel für die Leuchtelemente 25 bereit. Hierzu weisen die Halterungsmittel in Längsrichtung der Profilwände 29a-e Halterungsnuten 31 auf, wobei jeweils zwei aneinander gegenüberliegende Halterungsnuten zur Aufnahme eines leistenartig ausgebildeten Leuchtelements 25 dient.

Als Leuchtelemente 25 dienen im gezeigten Beispielsfall LEDs, die auf einer leistenartigen Leiterplatte angeordnet sind, wodurch eine LED-Lichtleiste 32 gebildet ist.

Die Profilwände 29a-e besitzen jeweils einen Grundabschnitt 33 und wenigstens eine vom Grundabschnitt 33 abragende mit der Halterungsnut 31 ausgestattete Halterippe 34.

Die erste Profilwand 29a besitzt einen relativ kurzen Grundabschnitt 33, von dem aus sich die mit der Halterungsnut 31 ausgestattete Halterippe 34 erstreckt. Der Grundabschnitt 33 der zweiten Profilwand 29b wird durch die beiden Profilwandabschnitte 30a, 30b gebildet. Die Halterippe 34 befindet sich hier an dem zweiten Profilwandabschnitt 30b und springt ihrerseits vom zweiten Profilwandabschnitt 30b nach innen. Durch die beiden sich gegenüberliegenden Halterippen 34 an der ersten und an der zweiten Profilwand 29a, 29b mit den darin ausgebildeten Haltenuten 31 wird ein Einschubschacht 35 für die LED-Lichtleiste 32 gebildet, wodurch die LED-Lichtleiste 32 stirnseitig in den zugeordneten Einschubschacht 35 eingeschoben werden kann und dadurch die Position und auch die Ausrichtung der Hauptstrahlrichtung der LEDs bereits vorgegeben ist. Die in den zugeordneten Einschubschacht 35 eingesetzte LED-Lichtleiste 32 des ersten Aufnahmeabschnitts 24a strahlt also zur Ausleuchtung des fahrzeugnahen Umfelds nach schräg unten.

Der zweite Aufnahmeabschnitt 24b wird durch die zweite Profilwand 29b und die dritte Profilwand 29c gebildet. Die dritte Profilwand 29c erstreckt sich mit ihrem Grundabschnitt 33 vom zweiten Schenkel 28b des Basisabschnitts 27 ausgehend nach schräg unten. Auch hier ist eine Halterippe 34 vorgesehen, die eine Halterungsnut 31 aufweist, die vom Grundabschnitt 33 der Profilwand 29c nach innen vorspringt. Diese Halterippe 34 an der dritten Profilwand 29c korrespondiert mit einer weiteren Halterippe 34 mit zugehöriger Halterungsnut 31 an der zweiten Profilwand 29b, die an der Rückseite des ersten Profilwandabschnitts 30a angeordnet ist. Im gezeigten Beispielsfall ist die Halterippe 34 nahe dem zweiten Schenkel 28b angeordnet. Die beiden Halterippen 34 an der zweiten und dritten Profilwand 29b, 29c bilden wiederum mit den dazugehörigen Halterungsnuten 31 einen weiteren Einschubschacht 35b, in der wiederum eine LED-Lichtleiste 32 eingeschoben ist.

Wie insbesondere in Figur 7 dargestellt, ist die Orientierung des zweiten Aufnahmeabschnitts 24b anders als die des ersten Aufnahmeabschnitts 24a, insbesondere schließen die Einschubschächte 35a, 35b mit dem zweiten Schenkel 28b des Basisabschnitts 27 voneinander verschiedenen Winkel ein. Der Winkel zwischen dem Einschubschacht 35a und dem zweiten Schenkel 28b ist deutlich größer als der Winkel zwischen dem zweiten Einschubschacht 35b und dem zweiten Schenkel 28b.

Der zweite Aufnahmeabschnitt 24b mit der darin aufgenommenen LED-Lichtleiste 32 dient zur Umgebungsbeleuchtung, d.h. die LEDs der Lichtleisten strahlen weiter in die Umgebung als diejenigen der im ersten Aufnahmeabschnitt 24a aufgenommenen LEDs.

Es ist eine dritte Profilwand 29c vorgesehen, die sich im Wesentlichen senkrecht von der Oberseite des ersten Schenkels 28a nach oben erstreckt. Auch diese Profilwand 29c besitzt eine Halterippe 34 mit zugeordneter Halterungsnut 31, die jedoch im Wesentlichen den Grundabschnitt 33 der Profilwand 29d senkrecht verlängert.

Schließlich ist eine fünfte Profilwand 29e vorgesehen, die sich von der Oberseite des ersten Schenkels 28a nach oben erstreckt. Die fünfte Profilwand 29e besitzt einen Grundabschnitt 33, der durch einen im Wesentlichen senkrecht an den ersten Schenkel 29a angesetzten ersten Profilwandabschnitt 36a und einem vom ersten Profilwandabschnitt 36a im Wesentlichen rechtwinklig abstehenden zweiten Profilwandabschnitt 36b gebildet ist. Am zweiten Profilwandabschnitt 36b befindet sich eine in Richtung zum ersten Schenkel 28b vorspringende Halterippe 34 mit zugeordneter Halterungsnut 31, die mit der Halterippe 34 an der vierten Profilwand 29d und der dort angeordneten Halterungsnut 31 korrespondiert und gemeinsam mit dieser einen dritten Einschubschacht 35c bildet. Auch hier ist eine LED-Lichtleiste 32 eingeschoben. Zweckmäßigerweise handelt es sich bei der LED-Lichtleiste 32 um eine solche mit blauen LEDs, wodurch ein blaues Warnlicht erzeugt wird.

An dem zweiten Profilwandabschnitt 36b der fünften Profilwand 29e befindet sich an der Außenseite, also an der Seite weg vom ersten Schenkel 28b orientiert, weitere Halterippen 34 mit zugeordneten Halterungsnuten 31, die einen vierten Einschubschacht 35d bilden. Auch in den vierten Einschubschacht 35d ist eine LED-Lichtleiste 32 eingeschoben. Zweckmäßigerweise hat diese LED-Lichtleiste 32 rote LEDs, wodurch ein rotes Warnlicht erzeugt wird, das vor allem bei dem Einsatz von Einsatzfahrzeugen 11 auf Flugfeldern benötigt wird.

Wie bereits erwähnt, umfasst das Beleuchtungsmodul 22 ein lichtdurchlässiges Abdeckelement 26, das im gezeigten Beispielsfall von einer transparenten, insbesondere aus Acrylglas bestehenden Abdeckscheibe gebildet ist. Das Abdeckelement 26 ist charakteristisch geformt und an die einzelnen Aufnahmeabschnitte 24a-d angepasst. Dabei weist das lichtdurchlässige Abdeckelement 26 mehrere unterschiedlich zueinander orientierte jeweils einem der Aufnahmeabschnitte 24a-d zugeordnete Abstrahlabschnitte 37a-d auf. So wird beispielsweise das von der LED-Lichtleiste 32 des ersten Aufnahmeabschnitts 24a ausgesendete Licht über den ersten Abstrahlabschnitt 37a in das fahrzeugnahe Umfeld geleitet.

Es ist beispielsweise möglich, dass ein oder mehrere Abstrahlabschnitte 37a-d mit einer von weiß unterschiedlichen Signalfarbe ausgestattet sind. Im gezeigten Beispielsfall ist der dritte Abstrahlabschnitt 37c, der dem blauen Warnlicht zugeordnet ist, aus blaugefärbten Material hergestellt oder mit einer blauen Folie beklebt.

Wie insbesondere in Figur 7 gezeigt, befinden sich an den einander entgegengesetzten Enden des ersten und zweiten Schenkels 28a, 28b des Basisabschnitts 27 Befestigungsvorsprünge 38, die mit Befestigungsnuten 39 an den einander entgegengesetzten Enden des lichtdurchlässigen Abdeckelements 26 zusammenwirken. Dadurch lässt sich das lichtdurchlässige Abdeckelement 26 lösbar werkzeuglos am Trägerprofil 23 befestigen.

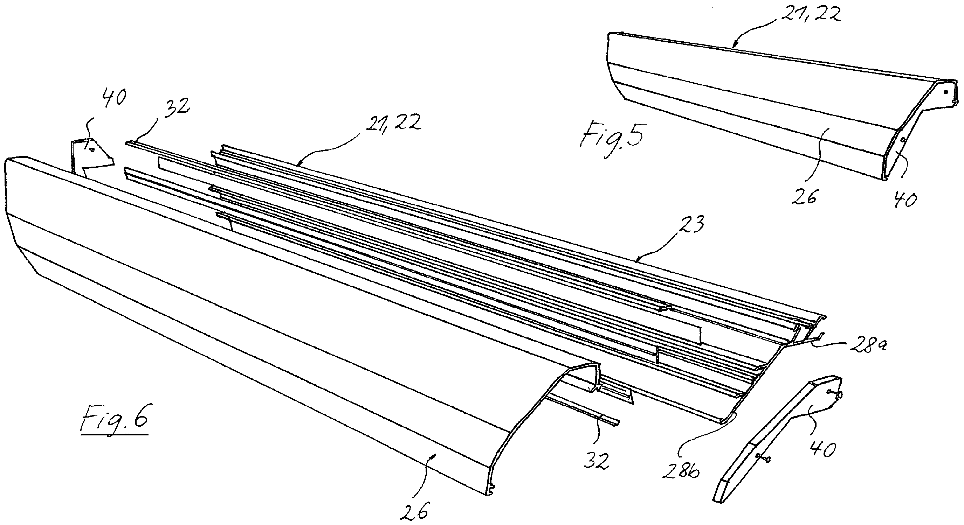

Wie insbesondere in den Figuren 4 und 6 gezeigt, sind die stirnseitigen Enden der Beleuchtungsmodule, also die stirnseitig offenen Enden des Abdeckelements 26 in Kombination mit dem Trägerprofil 23, durch jeweils ein Stirnprofil 40 verschlossen.

Wie insbesondere in Figur 4 gezeigt, besitzt eine Variante des Beleuchtungsmoduls 22 ein Basisabschnitt 27, dessen erster Schenkel 28a eine trapezförmige Grundform aufweist. Entsprechend ist auch das lichtdurchlässige Abdeckelement 26 trapezförmig ausgebildet. Bei der in den Figuren 3 und 4 gezeigten Variante, bei dem es sich um ein sogenanntes A-Profil handelt, verbreitert sich das Trapezprofil nach unten.

Bei der in den Figuren 5 und 6 gezeigten Variante ist es genau umgekehrt. Hier ist der zweite Schenkel 28b des Basisabschnitts 27 ebenfalls mit einer trapezförmigen Grundform ausgestattet, jedoch verjüngt sich diese Grundform nach unten. Auch das zugeordnete lichtdurchlässige Abdeckelement 26 ist entsprechend trapezförmig ausgebildet.

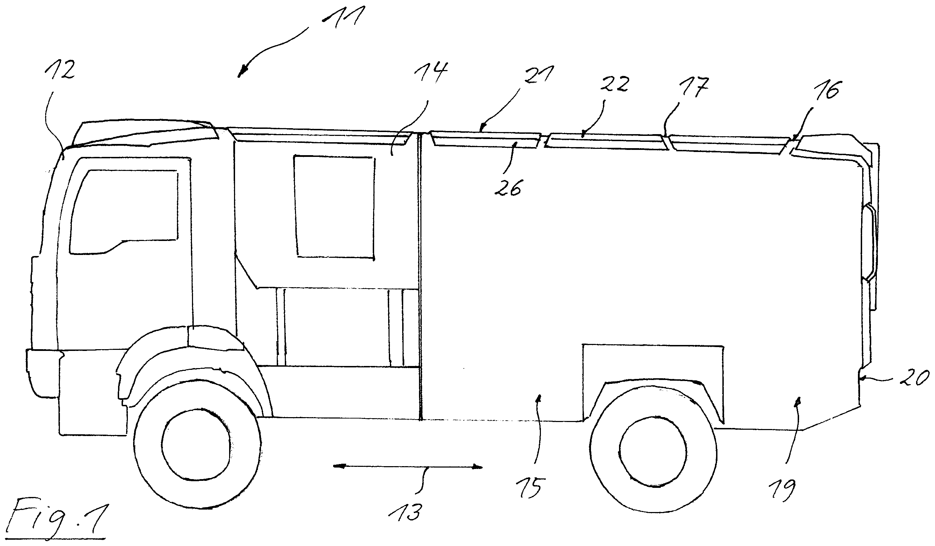

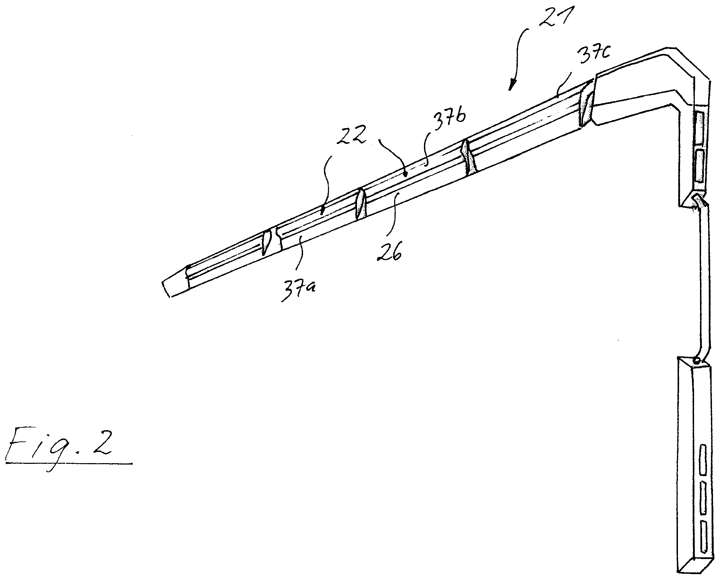

Wie insbesondere in Figur 1 und 2 gezeigt, sind mehrere Beleuchtungsmodule 22 vorgesehen, die in Fahrzeug-Längsrichtung hintereinander an der Dachkante des Einsatzfahrzeugs 11 befestigt sind. Dabei liegen die jeweiligen ersten Schenkel 28a der Basisabschnitte 27 der Trägerprofile 23 auf dem Fahrzeugdach 16 auf, während die jeweiligen zweiten Schenkel 28b in Anlage zur Fahrzeugseite 19 liegen.

Wie insbesondere in Figur 1 gezeigt, können die Beleuchtungsmodule 22 unterschiedlich lang gestaltet sein. So ist es beispielsweise möglich, am Dach der Mannschaftskabine 14 ein gegenüber den restlichen Beleuchtungsmodulen 22 längeres Beleuchtungsmodul 22 einzusetzen. Am Dach des Kastenaufbaus 15 hingegen sind alternierend Beleuchtungsmodule 22 mit divergierenden und konvergierenden Schenkeln 28a, 28b vorgesehen.

## Patentansprüche

1. Einsatzfahrzeug, insbesondere Feuerwehrfahrzeug, mit einer Beleuchtungseinrichtung (21), die wenigstens ein in einem Bereich der Dachkante des Einsatzfahrzeugs (11) angeordnetes Beleuchtungsmodul (22) aufweist, das wenigstens ein am Einsatzfahrzeug (11) befestigtes Trägerprofil (23) aufweist, das mehrere Aufnahmeabschnitte (24a-d) aufweist, in denen jeweils Leuchtelemente (25) aufgenommen sind, wobei die Aufnahmeabschnitte (24a-d) derart zueinander ausgerichtet sind, dass die darin aufgenommenen Leuchtelemente (25) unterschiedliche Raumabschnitte beleuchten, wobei zu den Raumabschnitten ein fahrzeugnahes Umfeld des Einsatzfahrzeugs (11) zählt, und wobei das Beleuchtungsmodul (22) wenigstens einem am Trägerprofil (23) befestigtes, lichtdurchlässiges Abdeckelement (26) aufweist, wobei das Trägerprofil (23) einen Basisabschnitt (27) aufweist, an dem mehrere sich jeweils in Längsrichtung des Basisabschnitts (27) erstreckende Profilwände (29a-e) angeordnet sind, wobei die Aufnahmeabschnitte (24a-d) durch die Profilwände (29a-e) gebildet sind, und wobei an den Profilwänden (29a-e) Halterungsmittel zur Halterung der Leuchtelemente (25) ausgebildet sind, **dadurch gekennzeichnet, dass** das lichtdurchlässige Abdeckelement (26) derart ausgebildet ist, dass sämtliche Aufnahmeabschnitte (24a-d) des zugeordneten Beleuchtungsmoduls (22) abgedeckt sind, wobei das lichtdurchlässige Abdeckelement (26) einteilig ausgebildet ist und mittels Befestigungsmitteln im Bereich von zwei einander entgegengesetzten Enden des Basisabschnitts (27) angeordnet ist, und wobei das lichtdurchlässige Abdeckelement (26) mehrere unterschiedlich zueinander orientierte, jeweils einem der Aufnahmeabschnitte (24a-d) zugeordnete Abstrahlabschnitte (37a-d) aufweist.

2. Einsatzfahrzeug nach Anspruch 1, **dadurch gekennzeichnet, dass** die Profilwände (29a-e) einstückig mit dem Basisabschnitt (27) verbunden, insbesondere aus dem Material des Trägerprofils (23) herausgeformt sind.

3. Einsatzfahrzeug nach Anspruch 2, **dadurch gekennzeichnet, dass** die Trägerprofile (27) als Strangpressprofile, insbesondere Aluminium-Strangpressprofile, ausgebildet sind.

4. Einsatzfahrzeug nach einem der vorhergehenden Ansprüche, **dadurch gekennzeichnet, dass** der Basisabschnitt (27) eine Vorderseite aufweist, an der die Profilwände (29a-e) angeordnet sind und eine Rückseite besitzt, an der eine Befestigungsschnittstelle zur Befestigung im Einsatzfahrzeug (11) ausgebildet ist.

5. Einsatzfahrzeug nach einem der vorhergehenden Ansprüche, **dadurch gekennzeichnet, dass** der Basisabschnitt (27) als Winkelprofil mit einem ersten und einem zweiten Schenkel (28a, 28b) ausgebildet ist, wobei vorzugsweise der ersten Schenkel (28a) in Anlage zum Fahrzeugdach (16) und der zweite Schenkel (28b) in Anlage zu einer Seitenwand des Einsatzfahrzeugs (11) liegen.

6. Einsatzfahrzeug nach einem der vorhergehenden Ansprüche, **dadurch gekennzeichnet, dass** der Basisabschnitt (27) eine trapezartige Grundfläche besitzt, wobei vorzugsweise der das Seitenwand des Einsatzfahrzeugs (11) zugeordnete zweite Schenkel (28b) des Basisabschnitts (27) die trapezartige Grundfläche aufweist.

7. Einsatzfahrzeug nach Anspruch 6, **dadurch gekennzeichnet, dass** die trapezartige Grundfläche des zweiten Schenkels (28b) in Richtung zum Fahrzeugboden des Einsatzfahrzeugs (11) divergiert oder konvergiert.

8. Einsatzfahrzeug nach einem der vorhergehenden Ansprüche, **dadurch gekennzeichnet, dass** die Halterungsmittel an den Profilwänden (29a-e) ausgebildete in Längsrichtung der Profilwände (29a-e) verlaufende Halterungsnuten (31) aufweisen, wobei jeweils zwei einander gegenüberliegende Halterungsnuten (31) zur Aufnahme von leistenartig ausgebildeten Leuchtelementen (35) dienen.

9. Einsatzfahrzeug nach Anspruch 8, **dadurch gekennzeichnet, dass** die Profilwände (29a-e) jeweils einen plattenartigen Grundabschnitt (33) und wenigstens eine vom Grundabschnitt (33) abragende, mit der Halterungsnut (31) ausgestattete Halterippe (34) aufweist.

10. Einsatzfahrzeug nach Anspruch 9, **dadurch gekennzeichnet, dass** zueinander benachbarte Halterippen (34) gemeinsam einen Einschubschacht (35a-d) für eine mit Leuchtelementen (25) bestückte Lichtleiste (32) bilden.

11. Einsatzfahrzeug nach einem der vorhergehenden Ansprüche, **dadurch gekennzeichnet, dass** mindestens einer der Abstrahlabschnitte (37a-d) mit einer farbigen, beispielsweise blauen, gelben oder roten, Signalfarbe ausgestattet ist.

12. Einsatzfahrzeug nach einem der vorhergehenden Ansprüche, **dadurch gekennzeichnet, dass** mehrere Beleuchtungsmodule (22) im Fahrzeug-Längsrichtung des Einsatzfahrzeugs (11) hintereinander an der Dachkante des Einsatzfahrzeugs (11) befestigt sind, wobei vorzugsweise alternierend Beleuchtungsmodule (22) mit divergierenden und konvergierenden Schenkeln (28b) der betreffenden Basisabschnitte (27) der Trägerprofile (23) vorgesehen sind.

## Claims

1. Emergency vehicle, in particular fire-fighting vehicle, with a lighting unit (21) which has at least one lighting module (22) located in a section of the roof edge of the emergency vehicle (11), which has at least one support profile (23) fixed to the emergency vehicle (11), which has several locating sections (24a-d) in each of which lighting elements (25) are accommodated, wherein the locating sections (24a-d) are so aligned to one another that the lighting elements (25) held therein illuminate different areas of space, wherein the areas of space include an area surrounding the emergency vehicle (11), and wherein the lighting module (22) has at least one light-transmissive cover element (26) fixed to the support profile (23), wherein the support profile (23) has a base section (27) on which are mounted several profile walls (29a-e), each extending in the longitudinal direction of the base section (27), wherein the locating sections (24a-d) are formed by the profile walls (29a-e), and wherein mounting means for mounting the lighting elements (25) are formed on the profile walls (29a-e), **characterised in that** the light-transmissive cover element (26) is so designed that all locating sections (24a-d) of the assigned lighting module (22) are covered, wherein the light-transmissive cover element (26) is formed in one piece and mounted through fastening means in the area of two opposite ends of the base section (27), and wherein the light-transmissive cover element (26) has several emitting sections (37a-d) with differing orientation to one another, each assigned to one of the locating sections (24a-d).

2. Emergency vehicle according to claim 1, **characterised in that** the profile walls (29a-e) are joined in one piece to the base section (27), in particular being formed from the material of the support profile (23).

3. Emergency vehicle according to claim 2, **characterised in that** the support profiles (23) are in the form of extruded profiles, in particular aluminium extruded profiles.

4. Emergency vehicle according to any of the preceding claims, **characterised in that** the base section (27) has a front side on which the profile walls (29a-e) are mounted, and a rear side, on which is formed a mounting interface for mounting in the emergency vehicle (11).

5. Emergency vehicle according to any of the preceding claims, **characterised in that** the base section (27) is in the form of an angle profile with a first and a second leg (28a, 28b), wherein preferably the first leg (28a) is in contact with the vehicle roof (16) and the second leg (28b) is in contact with a side wall of the emergency vehicle (11).

6. Emergency vehicle according to any of the preceding claims, **characterised in that** the base section (27) has a trapezoidal footprint, wherein preferably the second leg (28b) of the base section (27) assigned to the side wall of the emergency vehicle (11) has the trapezoidal footprint.

7. Emergency vehicle according to claim 6, **characterised in that** the trapezoidal footprint of the second leg (28b) diverges from or converges towards the vehicle base of the emergency vehicle (11).

8. Emergency vehicle according to any of the preceding claims, **characterised in that** the mounting means have mounting slots (31) formed on the profile walls (29a-e) and running in the longitudinal direction of the profile walls (29a-e), wherein in each case two opposite mounting slots (31) serve to locate strip-like lighting elements (25).

9. Emergency vehicle according to claim 8, **characterised in that** the profile walls (29a-e) have in each case a plate-like base section (33) and and at least one holding rib (34) extending away from the base section (33) and equipped with the mounting slot (31).

10. Emergency vehicle according to claim 9, **characterised in that** holding ribs (34) adjacent to one another together form a slide-in shaft (35a-d) for a lighting strip (12) equipped with lighting elements (25).

11. Emergency vehicle according to any of the preceding claims, **characterised in that** at least one of the emitting sections (37a-d) is equipped with a coloured signal colour, for example blue, yellow or red.

12. Emergency vehicle according to any of the preceding claims, **characterised in that** several lighting modules (22) are fixed to the roof edge of the emergency vehicle (11), one behind the other in the vehicle longitudinal direction of the emergency vehicle (11), wherein preferably alternating lighting modules (22) are provided with diverging and converging legs (28b) of the relevant base sections (27) of the support profiles (23).

## Revendications

1. Véhicule d'intervention, en particulier véhicule de pompiers, avec un dispositif d'éclairage (21), qui présente au moins un module d'éclairage (22) agencé dans une zone du bord de toit du véhicule d'intervention (11), qui présente au moins un profilé de support (23) fixé au véhicule d'intervention (11), qui présente plusieurs sections de réception (24a-d), dans lesquelles respectivement des éléments lumineux (25) sont reçus, dans lequel les sections de réception (24a-d) sont orientées les unes par rapport aux autres de sorte que les éléments lumineux (25) qui y sont reçus éclairent différentes sections de l'espace, dans lequel un environnement proche du véhicule du véhicule d'intervention (11) compte parmi les sections de l'espace, et dans lequel le module d'éclairage (22) présente au moins un élément de recouvrement translucide (26), fixé au profilé de support (23), dans lequel le profilé de support (23) présente une section de base (27), au niveau de laquelle plusieurs parois de profilé (29a-e) s'étendant respectivement dans la direction longitudinale de la section de base (27) sont agencées, dans lequel les sections de réception (24a-d) sont formées par les parois de profilé (29a-e), et dans lequel des moyens de retenue pour retenir les éléments lumineux (25) sont réalisés au niveau des parois de profilé (29a-e), **caractérisé en ce que** l'élément de recouvrement translucide (26) est réalisé de sorte que toutes les sections de réception (24a-d) du module d'éclairage (22) associé sont recouvertes, dans lequel l'élément de recouvrement translucide (26) est réalisé d'une pièce et est agencé au moyen de moyens de fixation dans la zone de deux extrémités opposées l'une à l'autre de la section de base (27), et dans lequel l'élément de recouvrement translucide (26) présente plusieurs sections de rayonnement (37a-d) orientées différemment les unes par rapport aux autres, associées respectivement à une des sections de réception (24a-d).

2. Véhicule d'intervention selon la revendication 1, **caractérisé en ce que** les parois de profilé (29a-e) sont reliées d'un seul tenant à la section de base (27), en particulier formées à partir du matériau du profilé de support (23).

3. Véhicule d'intervention selon la revendication 2, **caractérisé en ce que** les profilés de support (27) sont réalisés en tant que profilés filés, en particulier profilés filés en aluminium.

4. Véhicule d'intervention selon l'une quelconque des revendications précédentes, **caractérisé en ce que** la section de base (27) présente un côté avant, au niveau duquel les parois de profilé (29a-e) sont agencées et dispose d'un côté arrière, au niveau duquel une interface de fixation est réalisée pour la fixation dans le véhicule d'intervention (11).

5. Véhicule d'intervention selon l'une quelconque des revendications précédentes, **caractérisé en ce que** la section de base (27) est réalisée en tant que profilé d'angle avec une première et une deuxième branche (28a, 28b), dans lequel de préférence la première branche (28a) se trouve en application sur le toit de véhicule (16) et la deuxième branche (28b) se trouve en application sur une paroi latérale du véhicule d'intervention (11).

6. Véhicule d'intervention selon l'une quelconque des revendications précédentes, **caractérisé en ce que** la section de base (27) dispose d'une surface de base trapézoïdale, dans lequel de préférence la deuxième branche (28b) de la section de base (27) associée à la paroi latérale du véhicule d'intervention (11) présente la surface de base trapézoïdale.

7. Véhicule d'intervention selon la revendication 6, **caractérisé en ce que** la surface de base trapézoïdale de la deuxième branche (28b) diverge ou converge en direction du plancher de véhicule du véhicule d'intervention (11).

8. Véhicule d'intervention selon l'une quelconque des revendications précédentes, **caractérisé en ce que** les moyens de retenue présentent des rainures de retenue (31), s'étendant dans la direction longitudinale des parois de profilé (29a-e), réalisées au niveau des parois de profilé (29a-e), dans lequel respectivement deux rainures de retenue (31) opposées l'une à l'autre servent à la réception d'éléments lumineux (35) réalisés en forme de baguette.

9. Véhicule d'intervention selon la revendication 8, **caractérisé en ce que** les parois de profilé (29a-e) présentent respectivement une section de base de type plaque (33) et au moins une nervure de retenue (34) dépassant de la section de base (33), dotée de la rainure de retenue (31).

10. Véhicule d'intervention selon la revendication 9, **caractérisé en ce que** des nervures de retenue (34) adjacentes les unes aux autres forment conjointement un puits d'introduction (35a-d) pour une baguette de lumière (32) équipée d'éléments lumineux (25).

11. Véhicule d'intervention selon l'une quelconque des revendications précédentes, **caractérisé en ce qu'**au moins une des sections de rayonnement (37a-d) est dotée d'une couleur de signalisation colorée, par exemple bleue, jaune ou rouge.

12. Véhicule d'intervention selon l'une quelconque des revendications précédentes, **caractérisé en ce que** plusieurs modules d'éclairage (22) sont fixés dans la direction longitudinale de véhicule du véhicule d'intervention (11) les uns derrière les autres au niveau du bord de toit du véhicule d'intervention (11), dans lequel des modules d'éclairage (22) de préférence alternant sont prévus avec des branches divergentes et convergentes (28b) des sections de base (27) concernées des profilés de support (23).
